# EUROPEAN PATENT APPLICATION

(11) **EP 1 819 003 A1**
(43) Date of publication of application: **15.08.2007**
(21) Application number: 07102034.1
(22) Date of filing: 09.02.2007
(51) Int. Cl.: H01M 4/38, H01M 10/40, H01M 10/36, H01M 4/40

(54) **Negative active material, method of preparing same and rechargeable lithium battery including same**

(30) Priority: 10.02.2006 KR 20060013016
(71) Applicant: Samsung SDI Co., Ltd., Suwon-si Gyeonggi-do (KR)
(72) Inventor: SUNG, Min-Seok, c/o Samsung SDI Co., Ltd., Kiheung-gu, Yongin-si, Kyunggi-do (KR); KIM, Joon-Sup, c/o Samsung SDI Co., Ltd., Kiheung-gu, Yongin-si, Kyunggi-do (KR); KIM, Sung-Soo, c/o Samsung SDI Co., Ltd., Kiheung-gu, Yongin-si, Kyunggi-do (KR)
(74) Representative: Killin, Stephen James

(57) **Abstract**

A negative active material for a rechargeable lithium battery, a method for preparing the same, and a rechargeable lithium battery including the same. The negative active material includes a metal or metal alloy that is liquid at or near room temperature when alloyed with Sn, and Sn. The negative active material can provide a battery having excellent cycle-life characteristics.

## Description

The present invention relates to a negative active material for a rechargeable lithium battery, a method for preparing the same, and a rechargeable lithium battery including the same. More particularly, the present invention relates to a negative active material having excellent cycle-life characteristics for a rechargeable lithium battery, a method for preparing the same, and a rechargeable lithium battery including the same.

Rechargeable lithium batteries use materials (positive active materials and negative active materials) that are capable of reversibly intercalating or deintercalating lithium ions in positive and negative electrodes, and is constructed with an organic electrolyte solution or a polymer electrolyte between the positive and negative electrodes. Rechargeable lithium batteries generate electrical energy by an oxidation/reduction reaction during the intercalation/deintercalation of lithium ions at the positive and negative electrodes.

For a positive active material for the positive electrode of the rechargeable lithium battery, composite metal oxides such as LiCoO₂, LiMn₂O₄, LiNiO₂, LiNi₁₋ₓCoₓO₂ (0<x<1), LiMnO₂, and so on, have been researched.

Contemporarily, lithium metals have been used as a negative active material formed on the negative electrode of the rechargeable lithium battery. When the lithium battery is being charged, however, a lot of dendrites (i.e., branching treelike figures) grow on the surface of the lithium metals, and the formation of dendrites may results in short circuit of the battery, thus causing an explosion. Therefore, carbonaceous materials, such as amorphous carbon, crystalline carbon, have recently been used as the negative active material in place of lithium metals. Such carbonaceous materials, however, impart an irreversible capacity of 5 to 30% with respect to the initial capacity of the battery during the first several charge and discharge cycles, which wastes lithium ions and prevents at least one active material from being fully charged and discharged. Therefore, it has a disadvantage in its energy density.

In addition, it is known recently that a metal negative active material such as Si and Sn, which is supposed to have a high capacity, has a problem in that it imparts irreversible capacity characteristics. Further, the tin oxide disclosed by Japan Fuji Film. Co., Ltd. has come into the spotlight as an alternative to the carbonaceous negative active material. The metal negative active material shows 30 % or less of the initial Coulomb efficiency of the battery. Further, as lithium is continuously intercalated and deintercalated to generate a lithium-metal alloy, the capacity is remarkably decreased and the capacity preserving rate is remarkably deteriorated after 150 charge and discharge cycles. Therefore, the lithium battery with tin oxide as the negative active material cannot be commercially viable. Accordingly, much research work has recently been undertaken to improve these characteristics.

It is therefore an object of the present invention to provide an improved rechargeable lithium battery.

It is another object to provide a negative active material for a rechargeable lithium battery having excellent cycle-life characteristics.

It is yet another object to provide a method for preparing a negative active material with excellent cycle-life characteristics.

It is still another object to provide a rechargeable lithium battery including the negative active material.

According to an aspect of the present invention, a negative active material is provided for a rechargeable lithium battery. The negative active material includes a metal or metal alloy that is liquid at or near room temperature when alloyed with Sn, and Sn.

According to another aspect of the present invention, a method for preparing a negative active material is provided. The method contemplates the preparation of a mother-alloy including Sn and the metal or metal alloy that is liquid at or near room temperature when alloyed with Sn, and pulverizing the mother-alloy.

According to still another aspect of the present invention, a rechargeable lithium battery is provided. The rechargeable lithium battery may be constructed with a negative electrode having the negative active material, a positive electrode having a positive active material that can reversibly intercalate/deintercalate lithium ions, and an electrolyte.

A more complete appreciation of the invention and many of the attendant advantages thereof, will be readily apparent as the same becomes better understood by reference to the following detailed description when considered in conjunction with the accompanying drawings in which like reference symbols indicate the same or similar components, wherein:
Figure 1 shows a phase diagram of a negative active material for a rechargeable lithium battery according to one embodiment of the principles of the present invention;
Figure 2A, 3A, and 4A are phase diagrams of a negative active material for a rechargeable lithium battery according to one embodiment of the present invention according to charge and discharge reactions of the rechargeable lithium battery;
Figures 2B, Figure 3B, and 4B schematically shows particle states in the phase diagrams in Figures 2A, 3A, and 4A, respectively;
Figure 5 schematically shows a rechargeable lithium battery constructed as one embodiment of the principles of the present invention;
Figure 6 is a graph showing charge and discharge characteristics of negative active materials according to Example 1;
Figure 7 is a graph showing cycle-life characteristics of cells constructed with negative active materials according to Example 1 and Comparative Example 1; and
Figure 8 is a graph showing recharging capacity versus voltage of the rechargeable lithium battery cell according to Example 1 at the 2^{nd}, 5^{th}, 10^{th}, 15^{th}, 20^{th}, 30^{th}, 40^{th}, and 50^{th} recharge cycles at 0.4 C.

The present invention relates to a negative active material for a rechargeable lithium battery including Sn as a main component.

The negative active material according to one embodiment of the present invention includes Sn and a metal or metal alloy that is liquid at or near room temperature when alloyed with Sn. The metal or metal alloy that is liquid at or near room temperature when alloyed with Sn means a fusible metal such as Ga or a Ga-containing alloy. Examples of the Ga-containing alloy include, but are not limited to, a Ga-In alloy. The fusible metal means a metal that can be easily melted at a temperature of less than 200 °C. In the negative active material, a trace amount of the metal or metal alloy that is liquid at or near room temperature when alloyed with Sn is sufficient. According to one embodiment of the present invention, the amount of the liquid metal or metal alloy (i.e., the metal or metal alloy that is liquid at or near room temperature when alloyed with Sn) is approximately more than 1 wt% and less than or equal to 15 wt%. According to another embodiment, the amount of the liquid metal or metal alloy ranges from approximately 3 wt% to 10 wt%. When the amount of the liquid metal or metal alloy is more than 15 wt%, the amount of liquid is large which is disadvantageous in a preparation process.

In addition, since the amount of Sn in a negative active material of the present invention does not include the amount of the metal or metal alloy that is liquid at or near room temperature when alloyed with Sn, Sn may be included in an amount of 100 wt% or less and preferably in an amount ranging from approximately 90 wt% to approximately 97 wt%. When Sn is included in an amount of less than the above range, that is, when the amount of the metal or metal alloy that is liquid at or near room temperature when alloyed with Sn is increased, a liquid phase may be excessively increased, causing problems in preparing a negative active material.

According to one embodiment of the principles of the present invention, a negative active material is a solid-solution alloy formed by including Sn and the metal or metal alloy that is liquid at or near room temperature when alloyed with Sn.

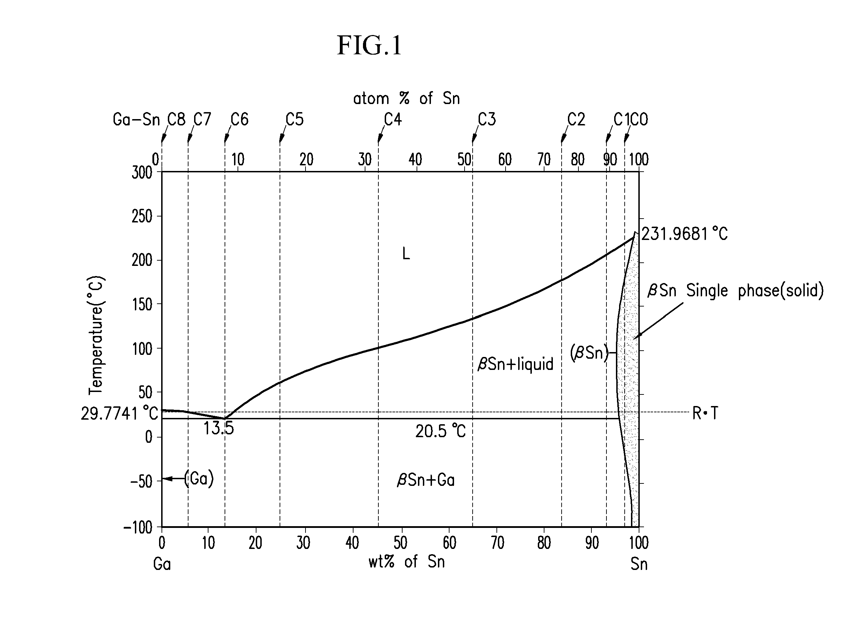

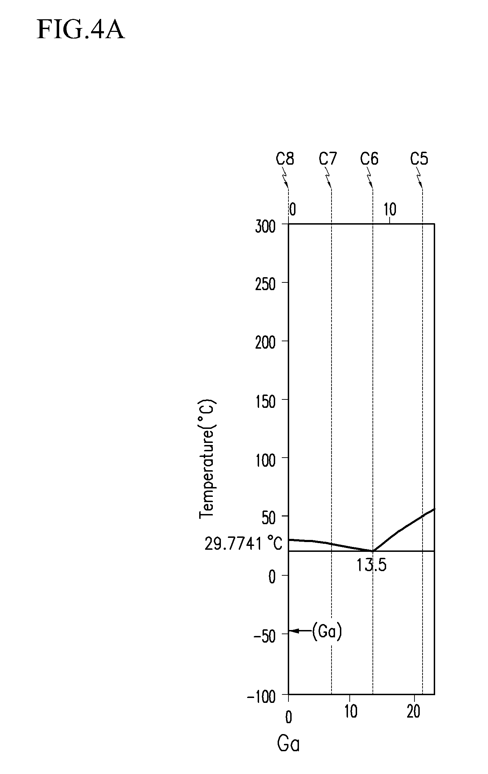

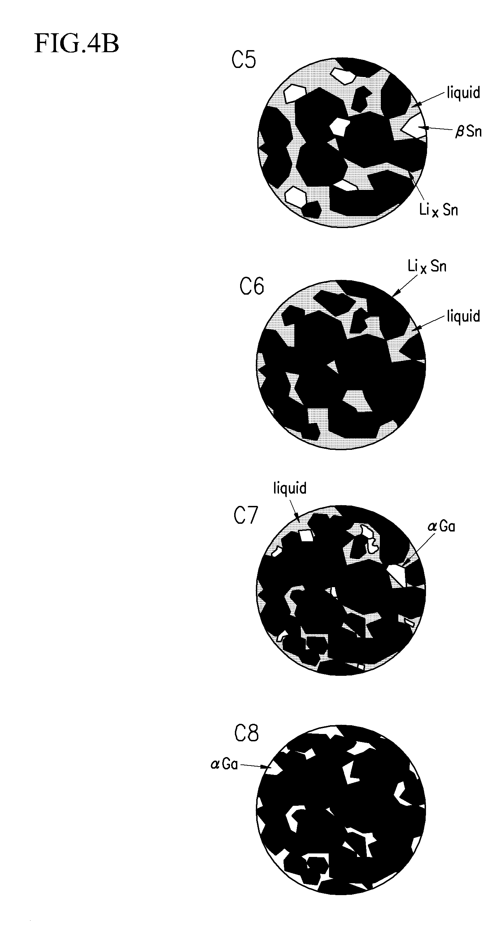

Hereinafter, referring to Figures 1 to 4B, a negative active material of the present invention is illustrated regarding how the negative active material changes according to charge and discharge reactions. Figures 1 to 4B show a negative active material including Ga as the metal that is liquid at room temperature when alloyed with Sn, but the present invention is not limited thereto. In other words, when the Ga-containing alloy such as Ga-In is used as the metal alloy that is liquid at room temperature when alloyed with Sn, the negative active material will undergo similar phase changes as the changes of the negative active material including Ga in Figure 1 and 4B.

Figure 1 shows an overall phase diagram of a Sn-Ga negative active material. As shown in Figure 1, a negative active material before charge and discharge reactions matches the area marked with "βSn single phase" (a solid solution alloy including Sn and Ga); that is, a small amount of Ga exists in solid Sn, forming a substitutive solid-solution. A solid solution is a solid-state solution of one or more solutes in a solvent. A substitutive solid-solution is a solid solution where the solutes are incorporated into the crystal lattice of the solvent by replacing the solvent particle in the lattice. In the present embodiment, the solute is Ga, and the solvent is Sn. In Figure 1, "liquid" denotes SnGa in liquid form. The liquid SnGa indicates a liquid-solid solution in which Sn is mixed with Ga atoms in a disordered fashion.

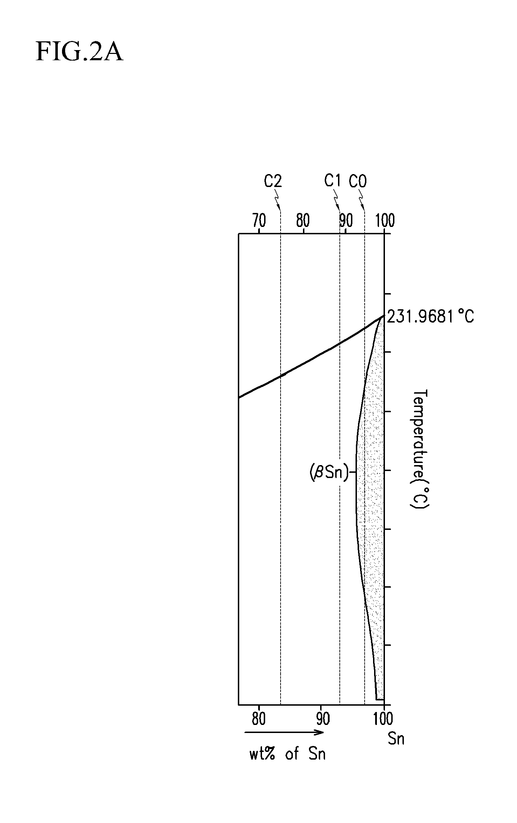

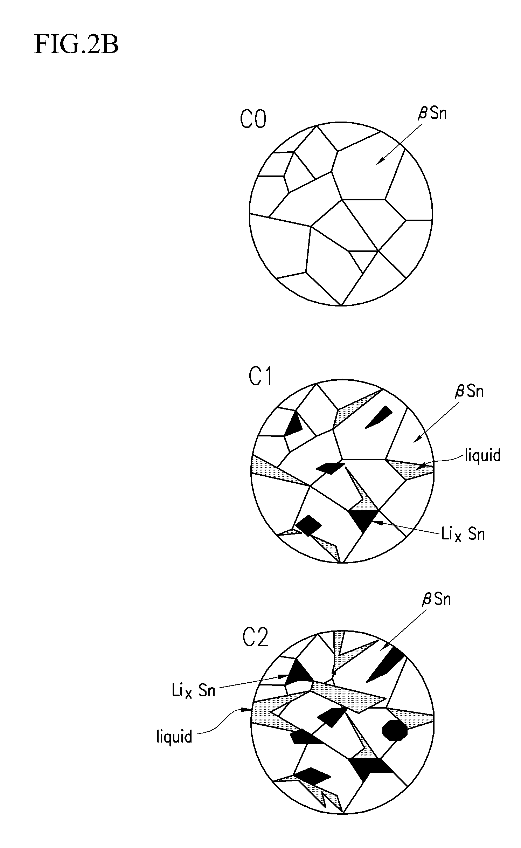

Then, when a charge reaction starts, Li is inserted into Sn and reacts with Sn, forming a LiₓSn compound. Accordingly, the concentration of Sn inside a single phase βSn matrix is continuously decreased. In the single phase βSn matrix, Ga does not react with Li. As described above, when the Sn metal inside the βSn single phase has a decreased concentration, the Sn metal, considering the Sn concentration in the single phase βSn matrix except the Sn metal included in the LiₓSn compound, changes from a βSn single phase (CO stage) to a C1 stage due to the decreasing concentration of Sn and formation of LiₓSn in a matrix, and then to C2 if the reaction continues as shown in Figure 2A. Accordingly, liquid SnGa including Sn and Ga is formed in the matrix, resultantly coexisting with βSn in a single phase and LiₓSn in a solid solution. Each phase such as CO, C1, and C2 in Figure 2A can respectively match each crystalline phase such as CO, C1, and C2 in Figure 2B. As shown in Figure 2B, Sn exists as a βSn single phase in solid form at first (CO stage). Then, as Sn is gradually formed into LiₓSn, a liquid is formed including Sn and Ga (C1 stage). In addition, the amount of the liquid increases (C2 stage).

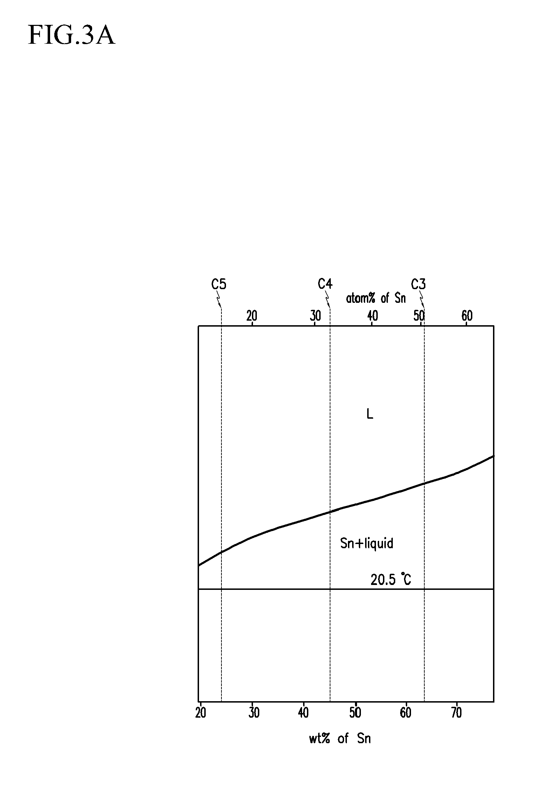

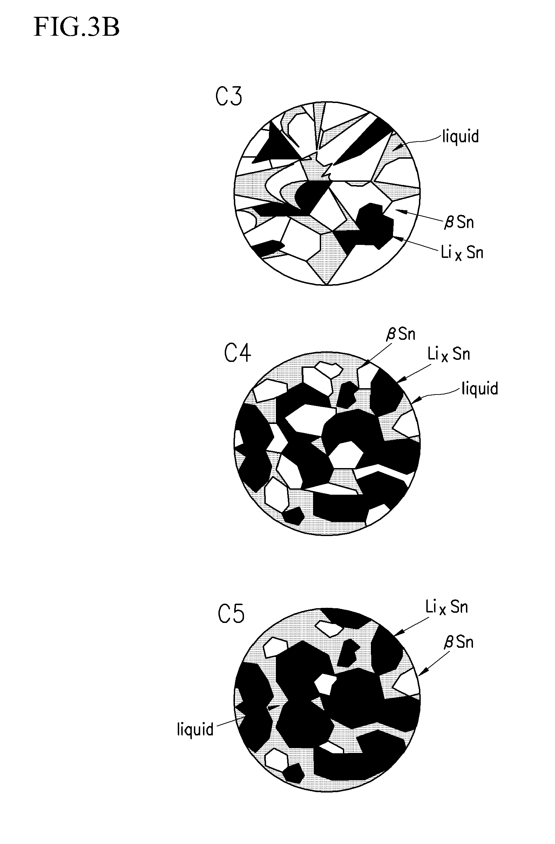

When the charge reaction further proceeds, the amount of LiₓSn further increases while the Sn concentration gradually decreases, and thereby Sn has a phase change from C3 to C4 and to C5 as shown in Figure 3B. As the liquid increases, Sn decreases in proportion.

When the charge reaction further proceeds, the Sn metal disappears at C6 as shown in Figures 4A and 4B; that is, the phases of the Sn and Ga inside the βSn single phase, except LiₓSn, are all changed into the liquid phase. Then, as the concentration of Sn continuously decreases, αGa starts being extracted from the liquid SnGa at C7, and the liquid is all transformed into αGa at C8. Herein, αGa is an alloy including Ga with a small amount of Sn in solid solution included therein.

Subsequently, when a discharge reaction is performed, Li is released from LiₓSn, increasing the Sn concentration and changing the negative active material into a liquid phase (C7). In addition, when the reaction reaches C6 stage, αGa disappears, and the Sn and Ga except LiₓSn transforms into the liquid phase. When the Sn concentration increases up to C5, however, βSn is nucleated on the border between the liquid and the LiₓSn.

The βSn nucleus may be first formed on a crack generated inside the LiₓSn to minimize superficial free energy, and then on a protruded part of the βSn nucleus. In other words, a crack can work as a site for producing a nucleus. Accordingly, no crack is found in a βSn crystal formed during the discharge. When discharged, all of αGa (a Ga alloy including a small amount of Sn in solid form) may be changed into a liquid, and then βSn is extracted.

When the reaction reaches C1 stage, most of the liquid is changed into βSn. Then, only a solid Sn metal in a single phase, that is, βSn, exists at the next stage, CO. In addition, when βSn is extracted as a solid-phase during the discharge, the βSn is extracted from the crack. Accordingly, even if there is a crack, the extracted βSn can complement the crack, improving cycle-life characteristics.

In addition, as the amount of Sn increases, Sn and Ga from the liquid can be further supplied to a βSn nucleus, increasing the size of the βSn or the number of nuclei.

According to the embodiment of the principles of the present invention, a negative active material is prepared by preparing an alloy using Sn and a metal or metal alloy that is liquid at or near room temperature when alloyed with Sn, and then pulverizing the alloy. The alloy manufacturing process may include any contemporary technique, for example an arc melting method, a quenching ribbon method, a quenching powder method, and the like.

The pulverizing process may include any method such as a mechanical cutting method and the like. The pulverized powder, however, should have an average particle diameter size of approximately 50 µm. When the average particle diameter size of the powder is more than 50 µm, the pulverized powder may deteriorate the cycle-life of the battery. When the powder is used to prepare an electrode, it may be difficult to uniformly prepare the electrode.

The rechargeable lithium battery including the negative active material according to the present embodiment may be constructed with a negative electrode, a positive electrode, and an electrolyte. The positive electrode may include an active material that is capable of carrying out the electrochemical oxidation and reduction reaction, and may include a lithiated intercalation compound generally used in the rechargeable lithium battery field. Examples of the lithiated intercalation compound include the compounds represented by the following Formulas 1 to 14.

**[Chemical Formula 1]** LiAO₂

**[Chemical Formula 2]** LiMn₂O₄

**[Chemical Formula 3]** LiₐNi_{b}B_{c}M_{d}O₂ (0.95 ≤ a ≤ 1.1, 0 ≤ b ≤ 0.9, 0 ≤ c ≤ 0.5, 0.001 ≤ d ≤ 0.1)

**[Chemical Formula 4]** LiₐNi_{b}Co_{c}Mn_{d}MₑO₂ (0.95 ≤ a ≤ 1.1, 0 ≤ b ≤ 0.9, 0 ≤ c ≤ 0.5, 0 ≤ d ≤ 0.5, 0.001 ≤ e ≤ 0.1)

**[Chemical Formula 5]** LiₐAM_{b}O₂ (0.95 ≤ a ≤ 1.1, 0.001 ≤ b ≤ 0.1)

**[Chemical Formula 6]** LiₐMn₂M_{b}O₄ (0.95 ≤ a ≤ 1.1, 0.001 ≤ b ≤ 0.1)

**[Chemical Formula 7]** DX₂

**[Chemical Formula 8]** LiDS₂

**[Chemical Formula 9]** V₂O₅

**[Chemical Formula 10]** LiV₂O₅

**[Chemical Formula 11]** LiEO₂

**[Chemical Formula 12]** LiNiVO₄

**[Chemical Formula 13]** Li ₃₋ₓF₂(PO₄)₃ (0 ≤ x ≤ 3)

**[Chemical Formula 14]** Li ₃₋ₓFe₂(PO₄)₃ (0 ≤ x ≤ 2)

In the above Formulas 2 to 14:
A is selected from the group consisting of Co, Ni, and Mn;
B is Co or Mn;
D is Ti, Mo, or Mn;
E is selected from the group consisting of Cr, V, Fe, Sc, and Y;
F is selected from the group consisting of V, Cr, M, Co, Ni, and Cu;
M is at least one transition metal or lanthanide element selected from the group consisting of Al, Cr, Mn, Fe, Mg, La, Ce, Sr, and V; and
X is O or S.

The electrolyte solution includes a non-aqueous organic solvent and a lithium salt.

The lithium salt is dissolved in the non-aqueous organic solvent to supply lithium ions in the battery. The lithium salt can perform a basic operation of a rechargeable lithium battery, and facilitates transmission of the lithium ions between the positive and negative electrodes. Non-limiting examples of the lithium salt include at least one supporting electrolyte salt selected from the group consisting of LiPF₆, LiBF₄, LiSbF₆, LiAsF₆, LiCF₃SO₃, LiN(CF₃SO₂)₃, Li(CF₃SO₂)₂N, LiC₄F₉SO₃, LiClO₄, LiAlO₄, LiAlCl₄, LiN(CₓF₂ₓ₊₁SO₂) (C_{y}F_{2y+1}SO₂) (where x and y are natural numbers), LiCl, and LiI. The concentration of the lithium salt is preferably in a range approximately from 0.1 M to 2.0 M. M (Molarity) means the number of moles of a given substance per liter of solution. When the concentration of the lithium salt is less than 0.1 M, the electrolyte performance is deteriorated due to its low ionic conductivity. When the concentration of the lithium salt is greater than 2.0 M, the lithium ion mobility is decreased due to an increase of the electrolyte viscosity.

The non-aqueous organic solvent acts as a medium for transmitting ions taking part in the electrochemical reaction of the battery. The non-aqueous organic solvent may include, but is not limited to, benzene, toluene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, R-CN (wherein R is a C2 to C50 linear, branched, or cyclic hydrocarbon, a double bond, an aromatic ring, or an ether bond), dimethylformamide, dimethylacetate, xylene, cyclohexane, tetrahydrofuran, 2-methyltetrahydrofuran, cyclohexanone, ethanol, isopropyl alcohol, dimethyl carbonate, ethylmethyl carbonate, diethyl carbonate, methylpropyl carbonate, propylene carbonate, methyl propionate, ethyl propionate, methyl acetate, ethyl acetate, propyl acetate, dimethoxyethane, 1,3-dioxolan, diglyme, tetraglyme, ethylene carbonate, propylene carbonate, γ-butyrolactone, sulfolane, valerolactone, decanolide, and mevalolactone. The non-aqueous organic solvent may be used singularly or in a mixture. When the organic solvent is used in a mixture, a mixing ratio can be controlled in accordance with a desirable battery performance.

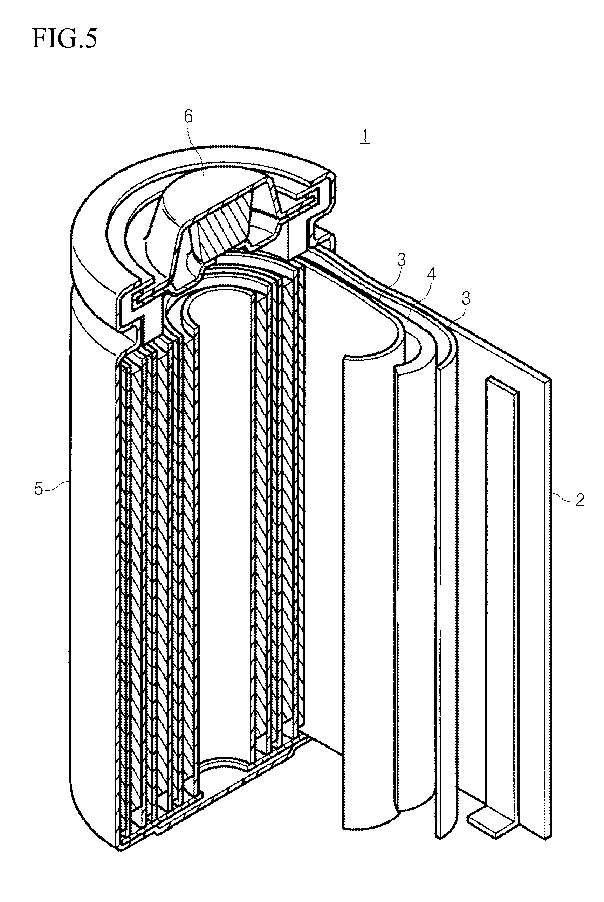

Figure 5 shows a rechargeable lithium battery having the above-mentioned structure according to an embodiment of the principles of the present embodiment. Figure 5 illustrates a cylindrical lithium ion cell 1, which is constructed with a negative electrode 2, a positive electrode 3, an electrolyte impregnating separator 4 interposed between negative electrode 2 and positive electrode 3, a battery case 5, and a sealing member 6 sealing battery case 5. The rechargeable lithium battery according to the present embodiment is not limited to the above shape, and may be formed in a prismatic shape, a pouch, and so on.

The following examples illustrate the present invention in more detail. It should be understood, however, that the present invention is not limited by these examples.

### Example 1

Sn was arc-melted with Ga in a weight ratio of 96 : 4 to prepare an alloy. The alloy was pulverized by a mechanical cutting method, until a negative active material is eventually prepared. The resulting negative active material is a pulverized power including Sn and Ga and has an average diameter of about 50 µm.

The negative active material was mixed with a super P conductive material and a polyvinylidene fluoride binder in a weight ratio of 8 : 1 : 1, until an active material slurry is eventually mixed. The active material slurry was coated on a Cu foil, obtaining a negative electrode having a mass density of 3.4 g/cc (i.e., 3.4 gram per cubic centimeter).

### Comparative Example 1

A negative electrode was prepared by the same method as in Example 1, except that pure Sn was used as a negative active material.

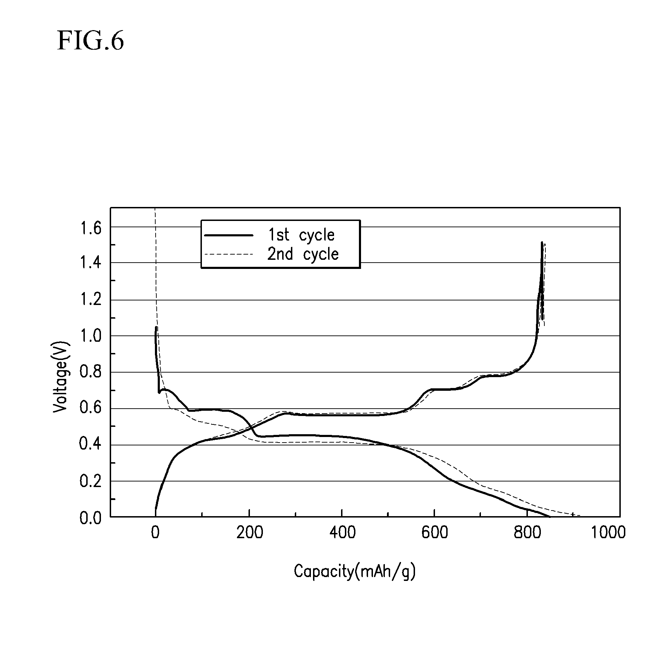

Then, the negative electrode of Example 1 was used to fabricate a rechargeable lithium battery cell in a contemporary method. The battery cell was charged by using an external electric source at 0.26 mA (0.05 C) with a voltage between 0.01 V and 1.5 V, and thereafter measured regarding charge and discharge characteristic. The results are provided in Figure 6. Referring to Figure 6, since there was no plateau indicating reaction between Li and Ga, the negative electrode of Example 1 had no reaction between Li and Ga.

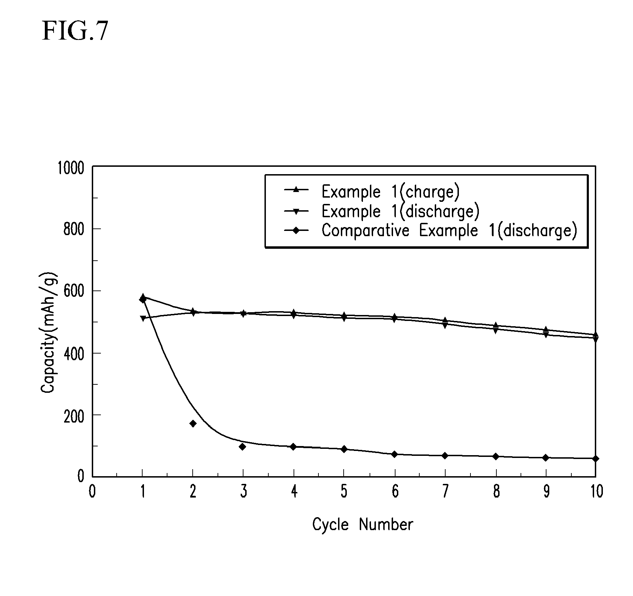

Next, the negative electrode of Example 1 was used to fabricate a rechargeable lithium battery cell in a contemporary method. The battery cell was charged and discharged at 0.4 C (2.1 mA) for 50 cycles, and thereafter the capacity of the battery call was measured regarding cycle-life characteristic. The results are shown in Figure 7. In addition, the negative electrode of Comparative Example 1 was used to fabricate a rechargeable lithium battery cell. The battery cell was charged and discharged at 0.4 C (2.1 mA) for 50 cycles, and thereafter the capacity of the battery cell was measured during discharge reactions. The results are also shown in Figure 7.

As shown in Figure 7, the rechargeable lithium battery cell of Example 1 had excellent capacity retention during both charge and discharge reactions. On the other hand, the rechargeable lithium battery cell of Comparative Example 1 had sharply-deteriorated capacity retention from the second discharge.

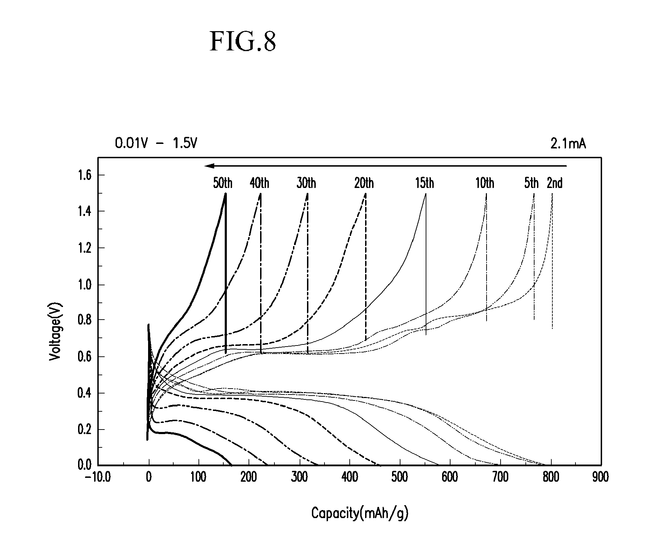

The rechargeable lithium battery cell of Example 1 were charged and discharged at 0.4 C, for 50 recharge cycles. The capacity of the battery at its 2^{nd}, 5^{th}, 10^{th}, 15^{th}, 20^{th}, 30^{th}, 40^{th}, and 50^{th} recharge cycles as a function of the voltage are shown in Figure 8. As shown in Figure 8, the rechargeable lithium battery cell of Example 1 showed appropriate voltage and capacity, which indicates that the battery cell can be applicable to a rechargeable lithium battery cell.

As described above, the negative active material for a rechargeable lithium battery of the present invention can provide a battery having excellent cycle-life characteristics and cell efficiency.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A negative active material for a rechargeable lithium battery, comprising:
a metal or metal alloy that is liquid at or near room temperature when alloyed with Sn; and
Sn.

2. A negative active material, comprised of tin (Sn) and a metal or metal alloy that is liquid at or near room temperature when alloyed with Sn, serviceable as a rechargeable battery electrode.

3. The negative active material of claims 1 or 2, with the metal or metal alloy that is liquid at or near room temperature when alloyed with Sn being selected from the group consisting of Ga and a Ga-containing alloy.

4. The negative active material of claims 1, 2 or3, with the metal or metal alloy that is liquid at or near room temperature when alloyed with Sn being present in an amount of more than approximately 1 wt% and less than or equal to 15 wt% based on the total weight of the negative active material.

5. The negative active material of claim 4, with the metal or metal alloy that is liquid at or near room temperature when alloyed with Sn being present in an amount of approximately 3 wt% to 10 wt% based on the total weight of the negative active material.

6. The negative active material of any one of the preceding claims, with the negative active material being a solid solution including atoms of the metal or metal alloy that is liquid at or near room temperature when alloyed with Sn, between Sn atoms.

7. A method for preparing a negative active material for a rechargeable lithium battery, comprising:
preparing a mother-alloy including Sn and a metal or metal alloy that is liquid at or near room temperature when alloyed with Sn; and
pulverizing the mother-alloy.

8. The method of claim 7, with the metal or metal alloy that is liquid at or near room temperature when alloyed with Sn being selected from the group consisting of Ga and a Ga-conatining alloy.

9. The method of claims 7 or 8, with the pulverizing being performed to produce a powder having an average particle size of less than or equal to approximately 50 µm.

10. A rechargeable lithium battery, comprising:
a negative electrode comprising a negative active material comprising Sn and a metal or metal alloy that is liquid at or near room temperature when alloyed with Sn;
a positive active material that can reversibly intercalate/deintercalate lithium ions; and
an electrolyte.

11. The rechargeable lithium battery of claim 10, with the metal or metal alloy that is liquid at or near room temperature when alloyed with Sn being selected from the group consisting of Ga and a Ga-containing alloy.

12. The rechargeable lithium battery of claims 10 or 11, with the metal or metal alloy that is liquid at or near room temperature when alloyed with Sn being present in an amount of approximately more than 1 wt% and less than or equal to 15 wt% based on the total weight of the negative active material.

13. The rechargeable lithium battery of claim 12, with the metal or metal alloy that is liquid at or near room temperature when alloyed with Sn being present in an amount of approximately 3 wt% to 10 wt% based on the total weight of the negative active material.

14. The rechargeable lithium battery of any one of claims 10 to 13, with the negative active material being a solid solution including atoms of the metal or metal alloy that is liquid at or near room temperature when alloyed with Sn, between Sn atoms.

15. A negative active material as claimed in any one of claims 1 to 6, wherein the tin and the liquid metal or metal alloy form a solid solution alloy.

16. Use of a negative active material as claimed in any one of claims 1 to 6 or 15 in a lithium rechargeable battery.
